(19) Europäisches Patentamt
European Patent Office
Office européen des brevets

(11) **EP 1 043 710 B1**

(12) **FASCICULE DE BREVET EUROPEEN**

(45) Date de publication et mention
de la délivrance du brevet:
**02.02.2005 Bulletin 2005/05**

(51) Int Cl.⁷: **G10H 5/00**

(21) Numéro de dépôt: **00400929.6**

(22) Date de dépôt: **04.04.2000**

(54) **Procédé de simulation de la propagation non linéaire d'une onde acoustique, notamment dans un résonateur**

Verfahren zur Simulation der nichtlinearen Ausbreitung einer akustischen Welle, insbesondere durch einen Resonator

Method for simulating a non-linear acoustic wave propagation, in particular through a resonator

(84) Etats contractants désignés:
**DE FR GB IT**

(30) Priorité: **08.04.1999 FR 9904394**

(43) Date de publication de la demande:
**11.10.2000 Bulletin 2000/41**

(73) Titulaire: **FRANCE TELECOM**
**75015 Paris (FR)**

(72) Inventeurs:
• **Vergez, Christophe**
**76100 Rouen (FR)**
• **Rodet, Xavier**
**94120 Fontenay-Sous-Bois (FR)**

(74) Mandataire: **Fréchède, Michel**
**Cabinet Plasseraud**
**84, rue d'Amsterdam**
**75440 Paris Cédex 09 (FR)**

(56) Documents cités:
**EP-A- 0 393 703       EP-A- 0 583 043**
**US-A- 5 276 272       US-A- 5 543 580**

**Description**

L'invention concerne un procédé de simulation de la propagation non linéaire d'une onde acoustique, notamment dans un résonateur.

Les résonateurs ou les guides d'ondes acoustiques de tout type sont utilisés dans de nombreux dispositifs tels que générateurs de sons, et, notamment, instruments de musique.

En particulier, lors de la mise en oeuvre d'instruments de musique, les facteurs d'instruments sont amenés à réaliser des ébauches soit matérielles, soit par simulation.

Les procédés de fabrication de ces instruments relèvent bien souvent du seul savoir-faire du facteur d'instruments, seules des étapes d'exécution pouvant actuellement, le cas échéant, faire l'objet d'une conduite de conception assistée par ordinateur.

Plus récemment, différents développements ont eu pour objet une étude plus systématique et théorique des instruments de musique, en vue de leur simulation au moyen de systèmes synthétiseurs par exemple.

En ce qui concerne les résonateurs ou les guides d'ondes acoustiques toutefois, la simulation de ces derniers se trouve confrontée aux problèmes liés à la propagation non linéaire de l'onde acoustique engendrée à leur entrée, notamment aux fortes amplitudes. Ceci a été expliqué dans le document EP-A-583043.

Ainsi, lors de la réalisation d'une série de mesures de fonctions de transfert d'un trombone, il a été constaté que la valeur de la fonction de transfert mesurée variait en fonction de l'amplitude des pressions d'entrée. Confer travaux publiés par J:W BEAUCHAMPS (1980) ; *"Analysis of simultaneous mouthpiece and output waveforms"* - Audio Engineering Society, pages 1-11, preprint N°1626.
Le résultat précité rend compte du phénomène de propagation non linéaire des ondes acoustiques dans la colonne d'air contenue dans l'instrument. Les conséquences d'un tel phénomène sur la forme d'onde peuvent apparaître de manière très significative ainsi qu'il a été démontré expérimentalement dans l'article intitulé *"Aeroacoustics of Musical Instruments",* Mecanica 31:131-141 publié par HIRSCHBERG A., PELORSON X, GILBERT J. (1996).

Des ondes de choc ont, en effet, été observées dans le corps d'un trombone joué fortissimo. En outre, au cours de travaux expérimentaux, J.GILBERT a estimé la distorsion de la forme d'onde et a conclu que la prise en compte de la propagation non-linéaire est nécessaire, pour des niveaux de jeu importants. Confer l'article intitulé *"Non linéarités dans les instruments de type cuivre : résultats expérimentaux".* Actes de Colloque du quatrième Congrès Français d'Acoustique, Marseille, J.GILBERT, J. F. P. (1996).

D'un point de vue perceptuel et musical, les effets de la propagation non linéaire sont en grande partie responsables des sons cuivrés obtenus lorsqu'un trombone ou plus généralement un instrument à vent de la famille des cuivres tel que trompette, bugle, cornet ou cor par exemple est joué fortissimo.

La présente invention a pour objet la mise en oeuvre d'un procédé de simulation de la propagation non linéaire d'une onde acoustique dans un résonateur, dont le milieu matériel de propagation est quelconque, notamment dans les résonateurs formés par les colonnes d'air des instruments à vent.

Un autre objet de la présente invention est en particulier, à partir d'un processus de propagation non linéaire en onde simple des ondes sonores, la mise en oeuvre d'un procédé de simulation de la distorsion de la forme d'onde résultante, causée par l'accumulation des effets de la propagation non linéaire.

Un autre objet de la présente invention est également, bien que le processus de propagation par onde simple exclue la formation du phénomène physique d'une discontinuité ou singularité de pression, la mise en oeuvre d'un procédé de simulation de la propagation non linéaire d'une onde acoustique dans un résonateur permettant, grâce à la prise en compte d'une contrainte physique, relative à la propagation d'échantillons successifs, de prendre en compte la formation et la propagation d'une onde de choc.

Un autre objet de la présente invention est également la mise en oeuvre d'un procédé de simulation de la propagation non linéaire d'une onde acoustique dans un résonateur prenant en compte le phénomène de réflexion/ transmission de l'onde simple, au niveau des discontinuités du résonateur, sous forme d'une onde directe et d'une onde inverse.

Un autre objet de la présente invention est, enfin, la mise en oeuvre d'un procédé de simulation de la propagation d'une onde acoustique dans un résonateur de forme quelconque, considéré comme une succession de résonateurs élémentaires de forme cylindrique de révolution, parallélépipédique ou autre.

Le procédé de simulation de la propagation non linéaire d'une onde acoustique, objet de l'invention, est mis en oeuvre dans le cadre d'une propagation non linéaire correspondant à une loi de vitesse de propagation non linéaire en fonction de l'amplitude de cette onde acoustique dans une direction de propagation.
Il est remarquable en ce qu'il consiste à décomposer ce résonateur, dans la direction de propagation, en une succession de sections de différentes longueurs et à appliquer au voisinage de la jonction de deux sections successives une loi de propagation linéaire.
En outre, pour chaque section successive, le procédé consiste à décomposer le champ de l'onde acoustique en la somme d'une première et d'une deuxième onde progressive se propageant en onde simple indépendamment non linéairement en sens inverse le long de la direction de propagation vers chaque extrémité de cette section, à associer à chaque échantillon de pression successif entrant dans chaque section une vitesse de propagation non linéaire fonction du milieu de propagation dans cette section et à imposer à chaque échantillon successif à l'entrée de chaque section une relation d'ordre temporel sur tout le trajet de propagation. Ce mode opératoire permet de calculer en extrémité de chaque section et du résonateur une séquence d'échantillons arrivant en extrémité du résonateur pour des instants différents, compte tenu de la période d'échantillonnage en entrée du résonateur.

Le procédé, objet de la présente invention, trouve application à l'étude, au développement et à la fabrication d'instruments de musique, notamment aux synthétiseurs musicaux. Il trouve également application à la simulation de tout phénomène de transmission non linéaire, ainsi qu'à tout processus de propagation non linéaire d'une onde acoustique selon la relation de Burger.

Il sera mieux compris à la lecture de la description et à l'observation des dessins ci-après, dans lesquels :

- la figure 1a représente, sous forme d'un organigramme général, les étapes successives de mise en oeuvre du procédé objet de l'invention ;
- la figure 1b représente à titre d'exemple purement illustratif un résonateur de forme arbitraire susceptible de simulation grâce à la mise en oeuvre du procédé objet de la présente invention ;
- les figures 2a et 2b représentent une simulation de la propagation non linéaire d'une onde acoustique sinusoïdale en entrée d'un résonateur, le phénomène de non-linéarité, déformation et cassure de l'onde, étant mis en évidence ;
- les figures 2c et 2d représentent à titre d'exemple non limitatif la déformation apportée par le phénomène de propagation non linéaire dans un résonateur à section constante à une onde acoustique sinusoïdale représentée par une suite d'échantillons discrets en entrée respectivement en sortie de ce résonateur ;
- les figures 3a à 3c représentent, à titre d'exemple non limitatif, des résonateurs de formes distinctes constitués par des sections successives jointives;
- la figure 4a représente, à titre purement illustratif, un mode de mise en oeuvre spécifique du procédé, objet de l'invention, permettant l'obtention en sortie d'un résonateur simplifié, formé par une section, d'une séquence d'échantillons pour des instants successifs rapportés à la période d'échantillonnage en entrée du résonateur ;
- la figure 4b représente un organigramme spécifique du processus mis en oeuvre tel qu'illustré en figure 4a.

Préalablement à la description proprement dite de la mise en oeuvre du procédé, objet de la présente invention, des rappels théoriques seront donnés relativement à la formalisation des phénomènes de propagation non linéaire d'une onde acoustique, telle qu'une onde simple par exemple.

En référence aux travaux de A.D.PIERCE et en particulier à l'article intitulé *"Acoustics, an introduction to its physical principles and applications"* Acoustic Society of America, New-York, 2nd Edition, 1989, la propagation non linéaire d'une onde simple, onde acoustique dans laquelle une pression p est engendrée dans un milieu compressible homogène et isentropique est décrite par l'équation non linéaire aux dérivées partielles, relation (1), dite de Burgers :

$$\frac{\partial p}{\partial t} + (v + c)\,\frac{\partial p}{\partial z} = 0$$

Dans cette relation $p(z,t)$ est la pression relative engendrée dans le milieu compressible par rapport au milieu ambiant, z désigne la direction de propagation, $v(z,t)$ désigne la vitesse du milieu dans le cas où le milieu ou le fluide est en mouvement, et $v+c(z,t)$, soit $v+c$, désigne la vitesse absolue du son, c'est-à-dire de manière plus générale la vitesse de l'onde acoustique.

En premier lieu, il est indiqué que la relation (1) précitée ne prend pas en compte la viscosité et autre terme dissipatif et résulte d'une première hypothèse selon laquelle la solution à une telle équation aux dérivées partielles est une application continue du temps t. Par application continue du temps, on indique qu'une telle notion implique que la solution est continûment dérivable.

En fait, la relation (1) précitée est une forme simplifiée de l'équation de BURGERS sans terme de dissipation ou de dispersion. En conséquence, la solution implique la propagation d'une onde acoustique en l'absence de toute dégradation d'énergie sonore et d'échantillons successifs représentant, par points, cette onde acoustique dans le milieu de propagation.

En référence à la relation (1) précitée, et selon les travaux réalisés par PIERCE, un observateur mobile voyageant dans le milieu de propagation à une vitesse vérifiant la relation :

$$v_{obs} = \frac{dz_{obs}}{dt} = v + c$$

perçoit la pression $p(z_{obs}(t),t)$ au point d'observation d'abscisse $Z_{obs}(t)$ sensiblement constante au cours du temps.

En outre, puisque l'expression v+c est une fonction de la pression p et que cette pression p apparaît constante par rapport au temps à l'observateur mobile, chaque point d'amplitude fixe p semble en fait se propager à une vitesse constante mais qui dépend de l'amplitude de cette pression p.

En outre, conformément aux hypothèses formulées par EARNSHAW pour des ondes acoustiques d'amplitudes relativement faibles dans un milieu tel qu'un gaz initialement au repos, il a été établi que lorsqu'on néglige la déviation de la vitesse du fluide par rapport à sa valeur ambiante, la pression acoustique engendrée ne modifiant pas localement la vitesse moyenne de cet écoulement, la vitesse du son, v+c peut alors s'écrire selon la relation (2) :

$$v + c = c_0 + \alpha p$$

avec

$$\alpha = \frac{\gamma + 1}{2\rho_0 c_0}$$

Dans la relation précédente, on indique que $\gamma$ désigne la constante thermodynamique du milieu, c'est-à-dire du gaz, et mesure le rapport des chaleurs spécifiques pour les gaz, chaleur spécifique à pression constante et chaleur spécifique à volume constant.

A titre d'exemple non limitatif, on indique que $\gamma = 1{,}4$ pour l'air.

En outre, $\rho_0$ désigne la densité du gaz au repos et vaut pour l'air $\rho_0 = 1{,}2$ kg.m$^{-3}$ et $c_0$ désigne, dans le cadre de l'approximation linéaire, la vitesse du son dans l'air au repos, soit $c_0 = 340$ m x s$^{-1}$.

La solution à l'équation aux dérivées partielles selon la relation (1) précitée permet l'établissement d'un modèle en temps continu, en particulier dans le cas d'une onde simple se propageant en champ libre.

Pour une onde simple de pression p solution de la relation (1) précitée, chaque point de l'onde précitée, chaque point pouvant être considéré comme une valeur échantillonnée de pression dans le temps, se propage sur une longueur $L_0$, qui peut être la longueur d'un résonateur, avec une vitesse dépendant de l'amplitude du point considéré de l'onde de pression, amplitude notée p(t).

La vitesse de propagation de chaque échantillon vérifie la relation :

$$c = c_0 + \alpha p(t)$$

$\alpha$ désigne une constante relative au milieu de propagation.

Le temps de propagation sur la longueur $L_0$ vérifie la relation (3) :

$$\Delta_{p(t)} = \frac{L_0}{c} = \frac{L_0}{c_0 + \alpha p(t)}$$

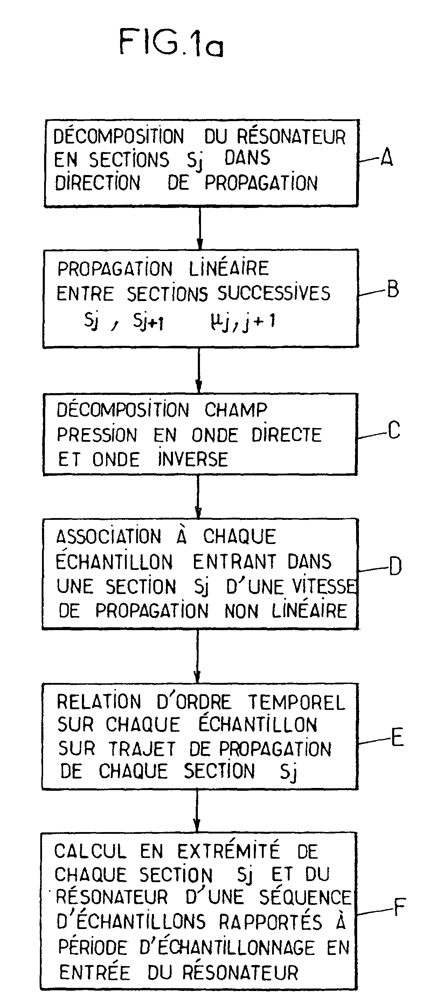

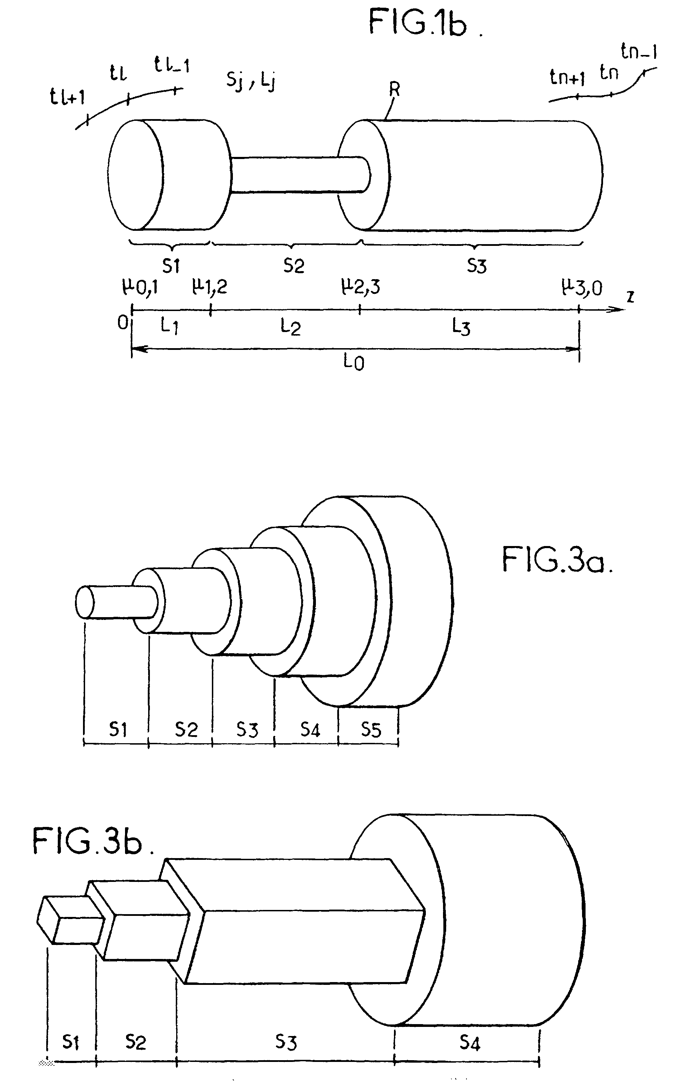

Compte tenu des rappels de notation précédemment cités, le procédé, objet de la présente invention, sera maintenant décrit en liaison avec les figures 1a et 1b.

Ainsi que représenté sur la figure précitée, le procédé de simulation de la propagation non linéaire d'une onde acoustique dans un résonateur, tel que représenté par exemple en figure 1b, ce résonateur présentant une longueur $L_0$ selon l'axe de propagation Oz et la propagation non linéaire correspondant à une loi de vitesse de propagation non linéaire en fonction de l'amplitude de chaque point de l'onde acoustique dans la direction de propagation Oz est remarquable en ce qu'il consiste à décomposer, ainsi que représenté à l'étape A de la figure 1a et sur la figure 1b, le résonateur de longueur $L_0$ dans la direction de propagation Oz en une succession de sections de différentes longueurs. Chaque section peut être constituée, soit par un guide d'onde, dans lequel le processus de propagation s'effectue par onde simple, soit par un résonateur, dans lequel le processus de propagation s'effectue par l'intermédiaire d'une onde directe et d'une onde inverse. Dans la suite de la description, le terme résonateur est employé pour désigner en pratique, soit un guide d'ondes, soit un résonateur proprement dit. Sur la figure 1b, ainsi que représenté à titre d'exemple non limitatif, le résonateur de longueur $L_0$ est réputé comporter trois sections successives $S_j$, notées $S_1$, $S_2$, $S_3$, de longueurs différentes. Chaque section $S_j$ est réputée présenter une longueur $L_j$. Sur la figure 1b, on a représenté les différentes sections $S_1$ à $S_3$, de forme cylindrique de manière non limitative ainsi qu'il sera explicité ultérieurement dans la description.

Suite à l'étape A précitée, le procédé, objet de la présente invention, consiste, en une étape B, à appliquer au voisinage de la jonction de deux sections successives une loi de propagation linéaire. On comprend en particulier que, conformément à un aspect particulièrement remarquable du procédé, objet de la présente invention, la propagation est considérée comme linéaire entre sections successives $S_j$, $S_{j+1}$. En référence à la figure 1b, on indique que les interfaces entre sections successives $S_1$ à $S_3$ peuvent être représentées par des valeurs scalaires réelles notées $\mu_{01}$ entre le milieu ambiant et le milieu de la première section $S_1$, $\mu_{12}$ entre la première section $S_1$ et la deuxième section $S_2$, $\mu_{23}$ entre la deuxième section $S_2$ et la troisième section $S_3$ et enfin $\mu_{30}$ entre la troisième section $S_3$ et le milieu ambiant. On comprend bien sûr que pour un nombre quelconque de sections, il est possible de définir un coefficient scalaire $\mu_{j,j+1}$ correspondant.

En fait, pour une jonction donnée de coefficient $\mu_{j,j+1}$ de la forme $\mu_{j,j+1} = \dfrac{Z_{j+1} - Z_j}{Z_{j+1} + Z_j}$, où $Z_j$, $Z_{j+1}$ désigne l'impédance caractéristique de chaque section $S_j$, $S_{j+1}$, $Z_j = \dfrac{\rho_0 c}{A_j}$, $A_j$ désignant l'aire de chaque section $S_j$, l'onde acoustique peut être décomposée en une onde directe et une onde inverse vérifiant la relation (4) :

■ Onde inverse :

$$p_{i,j} = \mu_{j,j+1} p_{0,j} + \left(1 - \mu_{j,j+1}\right) p_{i,j+1}$$

■ Onde directe :

$$p_{0,j+1} = \left(1 + \mu_{j,j+1}\right) p_{0,j} - \mu_{j,j+1} p_{i,j+1}$$

Dans cette relation, $p_{0,j}$ et $p_{0,j+1}$ désignent l'onde directe dans les sections j et j+1 et $p_{i,j}$ et $p_{i,\,j+1}$ désignent l'onde inverse dans les sections j et j+1. Une explication plus détaillée du phénomène de propagation linéaire au niveau de chaque jonction sera donnée ultérieurement dans la description.

Outre les mesures précédentes, on indique que, conformément à un aspect particulièrement remarquable du procédé de simulation objet de la présente invention, pour chaque section successive, celui-ci consiste en une étape C à décomposer le champ de l'onde acoustique pour toute section $S_j$ donnée en la somme d'une première et d'une deuxième onde progressive se propageant indépendamment non linéairement en sens inverse le long de la direction de propagation Oz précédemment citée, vers chaque extrémité de la section $S_j$ considérée.

D'une manière plus spécifique, on indique que la décomposition du champ de l'onde acoustique en onde directe et onde inverse à l'étape C précitée permet, compte tenu de la transmission linéaire par l'intermédiaire de la relation (4) précitée, d'une section $S_j$ à la section $S_{j+1}$ suivante, de tenir compte de l'ensemble des phénomènes de transmission de l'énergie sonore et de l'onde acoustique correspondante vers la section suivante et de réflexion de cette même énergie vers l'interface des sections précédentes, $S_{j-1}$, $S_j$ constituant la jonction précédente.

En tout état de cause, on indique que l'hypothèse d'une loi de propagation linéaire au voisinage de la jonction de deux sections successives est totalement justifiée car, d'une part, les phénomènes non linéaires engendrés par la modification de chaque section au niveau de la jonction entre deux sections $S_j$ et $S_{j+1}$ peuvent être négligés, et, d'autre part, le phénomène de propagation non linéaire en onde simple est réparti sur l'ensemble de chaque section.

En outre, l'hypothèse consistant à décomposer le champ de l'onde acoustique en la somme d'une première et d'une deuxième onde progressive se propageant non linéairement et indépendamment en sens inverse le long de la direction de propagation Oz est également justifiée dans la mesure où les conditions de propagation dans chaque section peuvent, en référence aux travaux expérimentaux de MENGUY et GILBERT, être considérées comme celles relatives à une onde directe et une onde inverse dont la somme correspond au champ de l'onde acoustique. Confer *Nonlinear wave propagation in cylindrical air-filled tubes.* Proceedings ICA joined with ASA, Seattle, 1998, L.MENGUY et J.GILBERT.

Compte tenu des contraintes de propagation induites par les étapes A, B et C précédentes, le procédé, objet de la présente invention, consiste ensuite, en une étape D, à associer à chaque échantillon de pression successif entrant dans chaque section $S_j$ une vitesse de propagation non linéaire fonction du milieu de propagation et de l'am-

plitude dans la section $S_j$ considérée.

Le procédé, objet de la présente invention, consiste alors, à l'étape E représentée en figure 1a, à imposer à chaque échantillon successif à l'entrée de chaque section $S_j$ une relation d'ordre temporel sur tout le trajet de propagation, c'est-à-dire sur le trajet de propagation de chaque section et en définitive sur l'ensemble du trajet de propagation. Ce mode opératoire permet, dans une étape F telle que représentée en figure 1a, de calculer en extrémité de chaque section et en définitive à l'extrémité du résonateur de longueur $L_0$ tel que représenté en figure 1b, une séquence d'échantillons arrivant en extrémité de ce résonateur pour des instants différents compte tenu de la période d'échantillonnage à l'entrée du résonateur.

On comprend en effet que, pour des échantillons successifs de l'onde acoustique en entrée du résonateur, c'est-à-dire à l'entrée de la section $S_1$ de la figure 1b, il est possible, compte tenu d'une part de la décomposition de ce résonateur en sections successives $S_j$ à l'étape A puis de la définition des conditions de propagation dans ces différentes sections et à la jonction de ces sections aux étapes B à E, d'autre part, d'obtenir en extrémité du résonateur à l'étape F une succession d'échantillons distincte nécessairement de la succession d'échantillons en entrée du résonateur, la succession d'échantillons de pression en sortie du résonateur étant caractéristique non seulement de la forme du résonateur et des différentes sections $S_j$ constituant celui-ci mais également des conditions de propagation et du milieu constituant chacune des sections précitées.

Des justifications théoriques physiques seront données maintenant en ce qui concerne la mise en oeuvre des étapes C de décomposition du champ de l'onde acoustique en onde directe et en onde inverse, puis D d'association à chaque échantillon entrant dans une section $S_j$ d'une vitesse de propagation non linéaire et d'application d'une relation d'ordre temporel E sur chaque échantillon sur le trajet de propagation de chaque section $S_j$.

Conformément à un aspect particulièrement remarquable du procédé de simulation, objet de la présente invention, les conditions de propagation dans chaque section $S_j$ peuvent être assimilées à la propagation d'une onde acoustique dans un tube droit idéal et sans pertes.

Dans ces conditions, si l'on considère la propagation non linéaire d'une onde acoustique p dans un tube droit idéal constituant un résonateur de longueur donnée, de longueur $L_0$ par exemple, on désigne par z la direction de propagation ainsi que mentionné précédemment dans la description, laquelle correspond également à l'axe longitudinal du résonateur. L'entrée de ce résonateur est à l'abscisse z = 0 et la sortie de ce résonateur est à l'abscisse z = $L_0$.

Conformément à un aspect particulièrement remarquable du procédé, objet de la présente invention, on indique que le champ de l'onde acoustique à l'intérieur du résonateur constituant un tube droit idéal et sans pertes peut être considéré comme la somme de deux ondes progressives, notées $p_0(z, t)$ et $p_i(z, t)$, se propageant respectivement vers la fin et l'entrée du résonateur. Pour une justification de l'hypothèse précédente, on pourra utilement se reporter à l'article de L.MENGUY et J.GILBERT précédemment cité.

Conformément à un autre aspect du procédé, objet de la présente invention, on considère que les ondes progressives $p_0(z, t)$ et $p_i(z, t)$, onde directe et onde inverse, sont des ondes simples, solution de l'équation aux dérivées partielles selon la relation (1) précédemment indiquée.

Compte tenu de ces hypothèses, pour un résonateur élémentaire correspondant à toute section $S_j$ de longueur $L_j$ donnée, on indique les propriétés ci-après :

- chaque point de l'onde directe $p_0(0, t)$ se propage dans le sens des abscisses z croissantes à la vitesse $c_{p0(0,t)}$, laquelle dépend uniquement de la valeur de ce point, c'est-à-dire de l'échantillon considéré ;
- chaque point de l'onde inverse $p_i(L_j, t)$ se propage dans le sens des abscisses z décroissantes à la vitesse $C_{pi(Lj, t)}$, laquelle dépend uniquement de la valeur de ce point, c'est-à-dire de l'échantillon correspondant ;
- l'onde directe et l'onde inverse sont des applications continues du temps, d'après la première hypothèse précédemment mentionnée dans la description.

Enfin, en ce qui concerne les conditions de propagation aux interfaces entre sections $S_j$, $S_{j+1}$, on indique que selon une deuxième hypothèse, la réflexion et la transmission à chaque extrémité du résonateur élémentaire constituant une section $S_j$ peuvent être traitées dans le cadre de l'approximation linéaire.

Ainsi que mentionné précédemment, cette deuxième hypothèse peut être justifiée en fait en référence aux travaux publiés par S.MAKAROV et M.OCHMANN dans l'article intitulé *"Non-linear and thermoviscous phenomena in acoustics",* Part II, ACOUSTICA-Acta Acoustica 83:97-222, 1997. L'hypothèse d'une onde localement plane se propageant linéairement est dans ces conditions justifiée par le fait que les effets de distorsion non linéaire résultent d'un phénomène d'accumulation dont les effets ne se produisent que sur de longues distances, ce qui, bien entendu, n'est pas le cas au niveau de chaque jonction entre les sections successives $S_j$ et $S_{j+1}$. Cette hypothèse justifiée permet en pratique de décrire simplement la réflexion/ transmission de l'onde directe ou inverse à chaque extrémité du résonateur élémentaire conformément à la relation (4) précitée.

Compte tenu du modèle de propagation non linéaire choisi, exposé précédemment dans la description, chaque échantillon de pression $p_0(0, t)$ à l'entrée de chaque résonateur élémentaire ou section $S_j$ atteint l'extrémité z = $L_i$

après un temps de propagation $\Delta_{p0,j(0,t)}$ dont la valeur minimum vérifie la relation (5) :

$$\Delta_{p0,j(0,t)} = \frac{L_i}{c_0 + \alpha p_{0,j}(0,t)}$$

Cet échantillon peut toutefois être ralenti par un échantillon antérieur plus lent, du fait même de la non linéarité de la propagation.

En introduisant la notation $L_j^+$ pour désigner l'abscisse directement en aval de la section $S_j$, c'est-à-dire juste après la fin du résonateur élémentaire constituant la section $S_j$, et pour une section unique, ou la dernière section du résonateur, la pression transmise à l'extérieur de ce résonateur élémentaire pour l'abscisse z = $L_j^+$ est alors le produit entre le coefficient de transmission scalaire réel $\mu_{j,0}$ et l'échantillon de pression du signal d'entrée qui était présent à l'abscisse z = 0 au temps t-$\tau$, cette pression vérifiant la relation (6) :

$$p_{0,j}(L_j^+, t) = \mu_{j,0} p_{0,j}\left(0, t - \frac{L_j}{c_0 + \alpha p_{0,j}(0, t - \tau)}\right)$$

où $\tau$ est le temps tel que $\Delta_{p0,j\,(0,t-\tau)} = \tau$

Dans cette relation, on indique que $\Delta_{p0,j(0,t-\tau)} = \tau$ représente le temps de propagation de l'onde acoustique ou de l'échantillon $p_{0,j(0,t-\tau)}$ présent à l'entrée de la section $S_j$ considérée.

Compte tenu des relations précédentes, on indique que bien entendu la propagation de l'onde directe $p_0$ vaut pour la propagation de l'onde inverse $p_i$ selon les abscisses décroissantes dans les mêmes conditions.

D'une manière générale, chaque section $S_j$ peut être constituée dans un milieu de propagation quelconque, solide ou fluide, et en particulier par un gaz. Dans ces conditions, la vitesse de propagation non linéaire vérifie la relation précédemment citée dans la description dans laquelle $\alpha$ représente une constante de propagation dans le milieu considéré. Ainsi, des milieux de propagation solides peuvent être envisagés, outre les gaz ainsi que mentionné précédemment dans la description. Le résonateur simulé peut alors être constitué par tout solide de forme quelconque et en particulier par une corde d'un instrument à cordes, l'onde acoustique pouvant correspondre à une onde de cisaillement par exemple. Lorsque le milieu de propagation est un gaz, l'onde acoustique est assimilée à une onde de pression.

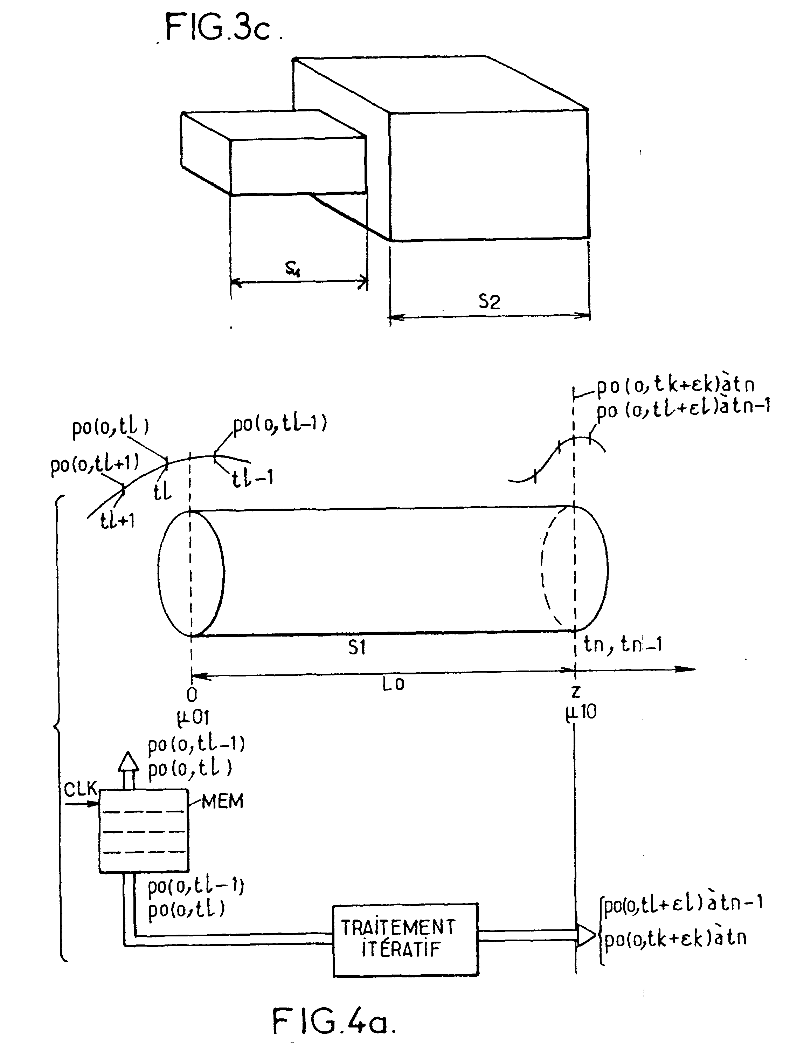

En référence aux figures 3a à 3d, on indique que les sections $S_j$ peuvent être de forme cylindrique, à base circulaire, quelconque, polygonale ou autre. Sur la figure 3a, on a représenté la simulation d'un pavillon de trompette par l'intermédiaire de sections cylindriques successives $S_1$ à $S_5$ formées chacune par des cylindres de révolution. La figure 3b représente un résonateur absolument quelconque mettant en oeuvre des sections parallélépipédiques $S_1$ à $S_3$ et une section cylindrique de révolution $S_4$. Enfin, la figure 3c représente un résonateur formé par une succession de solides parallélépipédiques ou de résonateurs tels que des pavillons de haut-parleur par exemple.

Différents éléments théoriques justifiant l'imposition de la relation d'ordre temporel sur chaque échantillon de pression sur le trajet de propagation de chaque section $S_j$, et en définitive sur la longueur totale $L_0$ de tout résonateur simulé, à l'étape E représentée en figure la seront maintenant donnés ci-après.

Le modèle de propagation continue décrit précédemment suppose que la pression de l'onde directe est une application continue du temps selon la première hypothèse, laquelle s'accorde avec les principes de la physique.

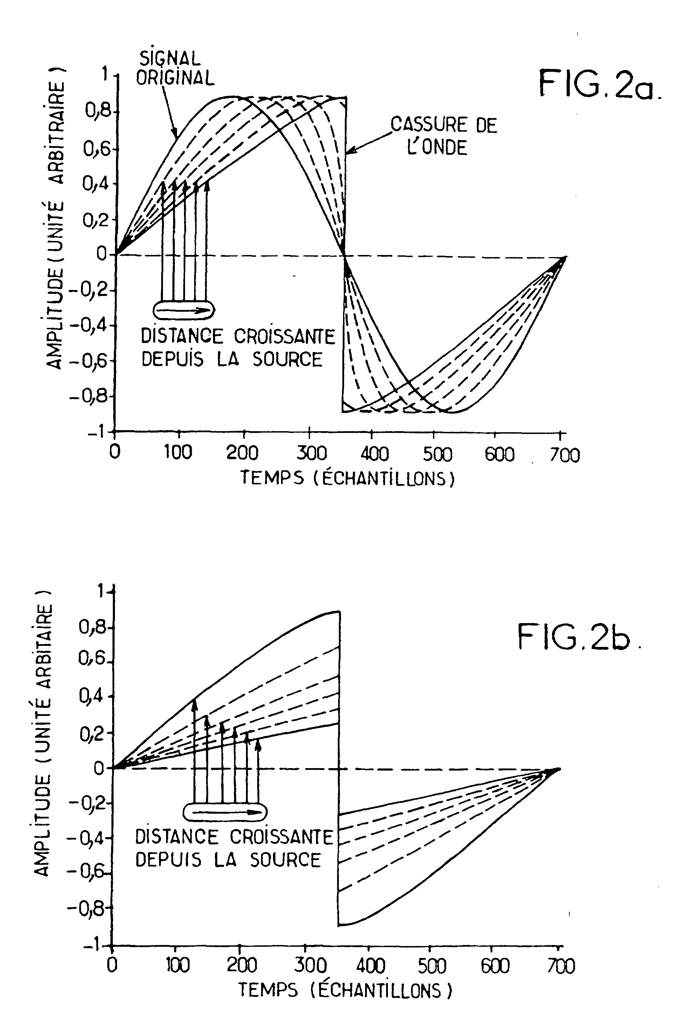

En référence à la figure 2a, laquelle représente une simulation de la propagation non linéaire d'une onde sinusoïdale d'entrée, signal original, la distorsion apportée à ce signal original, dont l'axe des ordonnées est gradué en amplitude relative et l'axe des abscisses en temps relatif au nombre d'échantillons est représentée. Le signal original est soumis à une distorsion en fonction de la distance croissante depuis la source, c'est-à-dire l'entrée du résonateur élémentaire par exemple, pour aboutir sur un parcours suffisamment long du fait de la non linéarité de la propagation, à une cassure de l'onde, évitant tout phénomène correspondant à une solution de pression dite multi-valuée. Dans la pratique en effet, une solution multi-valuée est évitée du fait de la formation d'une onde de choc. On rappelle que le phénomène d'onde de choc s'accompagne d'une dégradation de l'énergie sonore en énergie mécanique et en chaleur.

Toutefois, le phénomène d'onde de choc précité est absent du phénomène de propagation décrit par la relation (6). En effet, selon cette relation, les différents échantillons de l'onde acoustique se propagent de façon complètement indépendante les uns par rapport aux autres.

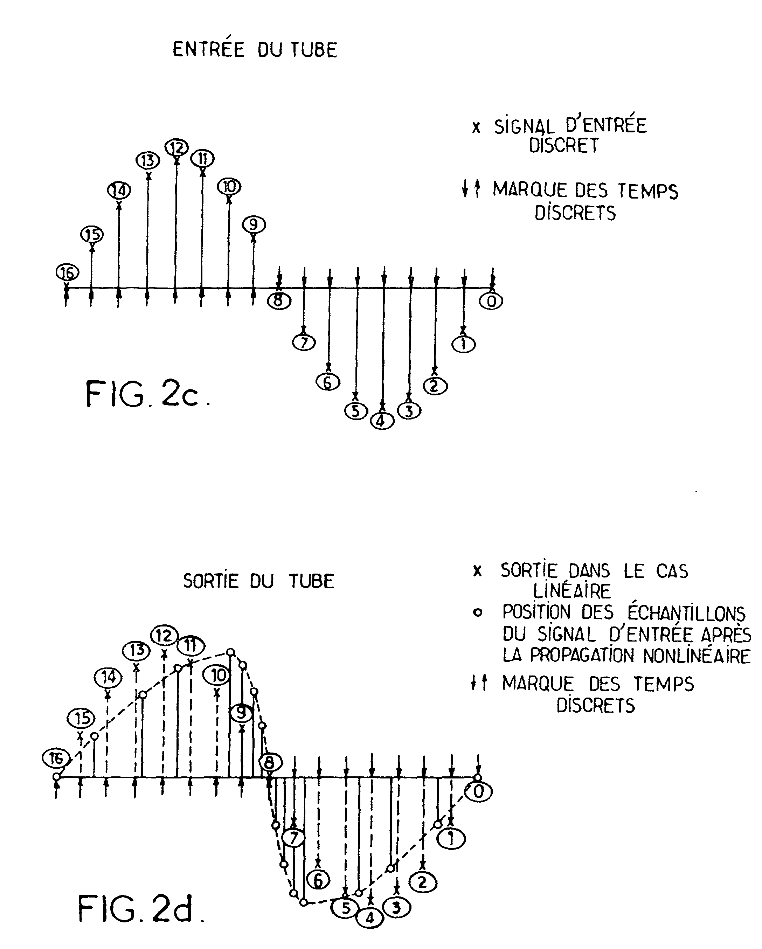

Sur la figure 2c, on a représenté le signal d'entrée discret suite d'échantillons pour une onde acoustique sinusoïdale et sur la figure 2d les échantillons correspondants en sortie du résonateur dans le cas d'une propagation linéaire et non linéaire respectivement.

Ce mode de propagation implique l'apparition d'une solution multi-valuée pourvu que la distance de propagation soit suffisamment longue et en particulier au bout d'un temps de propagation suffisamment long noté $t^*$ à l'abscisse $z^*$.

La solution multi-valuée vérifie la relation (7) :

$$\forall z_1 < z_2 \ / \ p(z_1, t) \geq p(z_2, t), \ \exists t^* > t/:$$

$$p(z^*,t^*) = p(z_1,t)$$
et
$$p(z^*,t^*) = p(z_2,t)$$

Toutefois, un tel phénomène est synonyme de rupture de causalité dans un modèle de propagation monodimensionnel selon la direction de propagation Oz. Une telle solution n'est pas en accord avec la physique.

En conséquence, conformément à l'étape E représentée en figure 1a, la contrainte temporelle est alors appliquée à chaque échantillon successif afin de prévenir toute rupture de causalité, cette contrainte temporelle s'énonçant de la façon ci-après : contrainte CO : deux échantillons consécutifs du signal d'entrée discret ne peuvent pas se dépasser pendant la propagation.

Compte tenu des éléments précités, l'étape F de la figure la consistant en un calcul en extrémité de chaque section $S_j$ et du résonateur d'une séquence d'échantillons compte tenu de la période d'échantillonnage en entrée du résonateur peut alors être explicitée de la manière ci-après. Dans un but de simulation d'un instrument de musique, il faut disposer en sortie du résonateur d'une suite d'échantillons régulièrement espacés et représentatifs des échantillons d'entrée après propagation non linéaire, c'est-à-dire propagation à vitesse distincte en fonction de l'amplitude, compte tenu de la contrainte temporelle précédemment mentionnée. Ces échantillons en sortie du résonateur élémentaire et finalement du résonateur global correspondent alors à des échantillons normalement délivrés par un instrument de musique simulé, ces échantillons d'onde acoustique pouvant alors être envoyés sur des convertisseurs numérique-analogique permettant de restituer un signal sonore.

L'hypothèse précédente selon laquelle on dispose en sortie du résonateur d'une suite d'échantillons régulièrement espacés vaut également pour chacune des sections $S_j$ dans la mesure où, conformément au procédé de modélisation, objet de la présente invention, celui-ci consiste en la mise en oeuvre d'une structure modulaire par sections $S_j$ où la sortie d'une section soumise à un modèle de propagation non linéaire est réinjectée dans une section suivante $S_{j+1}$ obéissant à un modèle de propagation non linéaire semblable. La possibilité de réinjecter la sortie de chaque section $S_j$ dans une section suivante $S_{j+1}$ nécessite également de disposer d'une série d'échantillons régulièrement espacés compte tenu de la fréquence d'échantillonnage d'entrée.

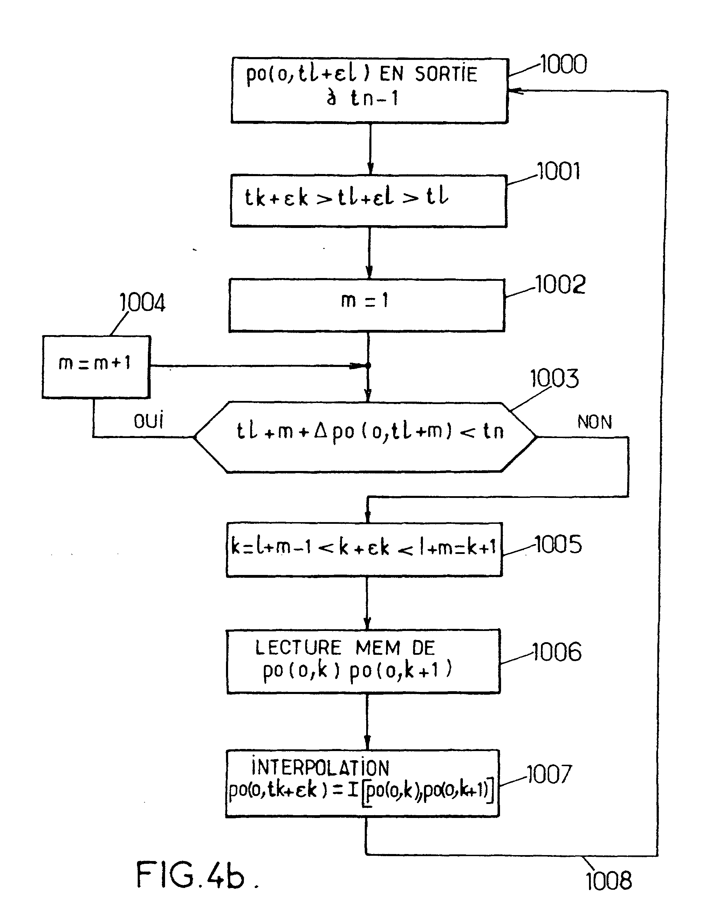

L'étape F représentée en figure la sera maintenant décrite dans un cas simplifié où le résonateur est réduit à un résonateur unique $S_1$ représenté en figure 4a en liaison avec la figure 4b. Dans ce cas simplifié, les valeurs d'échantillons sont notées sans indice j relatif au rang de la section, cette section étant unique.

Pour les raisons précédemment mentionnées, et conformément à un aspect relatif à la mise en oeuvre du procédé, objet de la présente invention, il est nécessaire de calculer la valeur de champ de l'onde acoustique $p_0$ qui atteint la fin du résonateur de section $S_1$ dans le cas non limitatif de la figure 4a, à chaque instant d'échantillonnage $t_{n-1}$, $t_n$ par exemple.

Toutefois, cette valeur ne correspond pas en général à un des échantillons du signal discret à l'entrée en raison, notamment, du phénomène de propagation non linéaire d'un échantillon donné dans la section considérée, cette propagation ne durant généralement pas un multiple entier de la période d'échantillonnage.

De manière plus spécifique, en référence à la figure 4a, et conformément à un aspect du procédé de simulation, objet de la présente invention, on recherche en fait l'instant $t_{k+\varepsilon k}$, cet instant correspondant à un temps entre deux instants d'échantillonnage consécutifs $t_k$ et $t_{k+1}$ du signal d'entrée avec $t_k < t_{k+\varepsilon k} \leq t_{k+1}$, instant tel que l'échantillon de champ de l'onde acoustique $p_0(0, t_{k+\varepsilon k})$ atteint la fin du résonateur ou de la section $S_1$ à l'instant d'échantillonnage $t_n$. En effet, compte tenu du phénomène de propagation non linéaire, en fonction de l'amplitude de ces échantillons, la simulation du processus de propagation non linéaire est assurée pourvu qu'à chaque instant successif d'échantillonnage, tels que $t_{n-1}$, $t_n$, en sortie du résonateur, ou de la section $S_1$ telle que représentée en figure 4a, la valeur de l'échantillon d'entrée $p_0(0, t_{k+\varepsilon k})$ se trouve intégralement transmise, sans perte, ainsi que mentionné dans la description, et atteint la fin ou l'extrémité du résonateur ou de la section $S_1$ à l'instant d'échantillonnage $t_n$.

Si en appliquant uniquement la relation (5), l'ordre temporel des échantillons est conservé, alors il y a coïncidence entre le temps de propagation de la valeur de cet échantillon, temps de propagation noté $\Delta p_0(0, t_{k+\varepsilon k})$ selon une version échantillonnée de l'onde acoustique suivant la relation (5) précédemment mentionnée, et la différence entre l'instant de sortie, instant d'échantillonnage $t_n$ du résonateur, ou de la section $S_1$, et l'instant d'entrée $t_{k+\varepsilon k}$.

La coïncidence précitée vérifie la relation (8) :

$$\Delta p_0(0, t_{k+\varepsilon k}) = t_n - t_{k+\varepsilon k}$$

Dans cette relation, le membre de droite désigne le temps de propagation de l'échantillon d'entrée $p_0(0, t_{k+\varepsilon k})$.

En fait, et conformément à un aspect particulier du procédé de simulation, objet de la présente invention, la valeur de l'échantillon d'entrée $p_0(0, t_{k+\varepsilon k})$ en sortie du résonateur ou de la section $S_1$ représentée en figure 4a à l'instant d'échantillonnage $t_n$ correspond à un rééchantillonnage du signal discret d'entrée $p_0(0, t_k)$ la relation (8) précédente étant de ce fait non linéaire.

La mise en oeuvre de la contrainte temporelle permet de conduire à une solution cohérente entre les principes physiques et la mise en oeuvre effective.

En référence à la figure 4a, on indique ainsi que le procédé, objet de la présente invention, a pour objet de trouver les valeurs de k et $\varepsilon$k telles que la pression en entrée $p_0(0, t_{k+\varepsilon k})$ ait une valeur interpolée entre des échantillons consécutifs parmi une suite d'échantillons notés $p_0(0, t_l)$, $p_0(0, t_{l-1})$, etc., constitutifs du signal ou de l'onde acoustique d'entrée, tout en préservant la relation de contrainte temporelle précédemment citée.

Ainsi que représenté sur la figure 4a, les échantillons consécutifs du signal d'entrée, ou onde acoustique d'entrée, sont stockés dans une mémoire MEM, chaque échantillon successif étant noté $p_0(0, t_{l-1})$, $p_0(0, t_1)$, $p_0(0, t_{l+1})$. Chaque échantillon est lu à partir d'un signal d'horloge noté CLK avec une période de lecture qui correspond au pas d'échantillonnage réel du signal d'entrée ou onde acoustique d'entrée. Le pas d'échantillonnage définit en fait le retard entre chaque échantillon successif.

En référence à la figure 4b, dans le but d'obtenir en sortie du résonateur ou de la section Si une valeur d'échantillon coïncidant en un instant $t_n$ d'échantillonnage à une valeur interpolée $p_{0(0, tk+\varepsilon k)}$ entre deux valeurs échantillonnées d'entrée, on suppose en premier lieu, à une étape 1000, que la valeur interpolée antérieure $p_{0(0,tl+\varepsilon l)}$ a effectivement atteint l'extrémité du résonateur, ou de la section $S_1$ sur la figure 4a, à l'instant d'échantillonnage antérieur $t_{n-1}$.

La contrainte temporelle CO étant respectée, les échantillons précités, à l'étape 1001, vérifient la relation :

$$t_{k+\varepsilon k} > t_{l+\varepsilon l} > t_l.$$

En outre, l'échantillon d'entrée $p_0(0, t_l)$ a déjà dépassé l'extrémité du résonateur, ou de la section $S_1$, à l'instant d'échantillonnage $t_n$ car le temps de propagation $\Delta p_0(0, t_l)$ de l'échantillon introduit à l'instant $t_l$ à l'entrée du résonateur est inférieur au temps $\theta = t_n - t_l$ écoulé depuis l'introduction de cet échantillon à l'entrée du résonateur. Cette condition s'écrit :

$$\Delta p_0(0, t_l) < t_n - t_l.$$

En conséquence, et en référence à la figure 4b, conformément à un aspect particulièrement avantageux du procédé de simulation objet de la présente invention, on lit dans la mémoire MEM à l'étape 1002 les échantillons successifs $p_0(0, t_{l+m})$ mémorisés aux instants d'échantillonnage successifs $t_{l+m}$ avec m = 1, à la première passe.

Ensuite, on compare par critère de comparaison d'infériorité, à l'étape 1003, la valeur de l'instant d'échantillonnage $t_{l+m}$ augmentée de la durée de propagation $\Delta p_0(0, t_{l+m})$ de l'échantillon de valeur $p_0(0, t_{l+m})$ et l'instant $t_n$.

Tant que le critère de comparaison d'infériorité est satisfait, on incrémente, à l'étape 1004, la valeur de m d'une unité, m = m+1, selon un processus itératif. A chaque itération, on calcule le temps de propagation $\Delta p_0(0, t_{l+m})$ de l'échantillon mémorisé de rang $t_{l+m}$ et l'on réitère le critère de comparaison d'infériorité.

Sinon, à l'étape 1005, on attribue à l'échantillon recherché $p_0(t_{k+\varepsilon k})$ un instant $t_{k+\varepsilon k}$ de coïncidence en sortie du résonateur compris entre les instants $t_{l+m-1}$ et $t_{l+m}$.

On lit alors dans la mémoire MEM, à l'étape 1006, les échantillons de rang k = l+m-1 et k+1 = l+m et la valeur de ces échantillons $p_0(t_{l+m-1})$ et $p_0(t_{l+m})$.

On comprend ainsi que le processus itératif précité fournit l'indice k = l+m-1 tel que l'échantillon $p_0(0, t_k)$ à l'entrée de la section $S_1$, ou du résonateur, a dépassé la fin de ce dernier et $p_0(0, t_{k+1})$ n'a au contraire pas dépassé l'extrémité de la section $S_1$, ou du résonateur, considérée.

On effectue ensuite, à l'étape 1007, une interpolation des valeurs d'échantillons lues $p_0(0, t_{l+m-1})$ et $p_0(0, t_{l+m})$ selon une valeur interpolée $p_0(0, t_{k+\varepsilon k})$. Sur la figure 4b, l'opération d'interpolation est notée :

$$p_0(0, t_{k+\varepsilon k}) = I\,[p_0(0, t_k), p_0(0, t_{k+l})]$$

On affecte ensuite à la valeur d'échantillon coïncidant avec l'instant $t_n$ en sortie du résonateur la valeur interpolée précitée $p_0(0, t_{l+\varepsilon l})$. Une initialisation successive 1008 par retour à l'étape 1000, à partir des valeurs $p_0(0, t_{k+\varepsilon k})$ à $t_n$ permet de poursuivre le processus de manière itérative pour l'instant suivant $t_{n+l}$.

Ainsi, et conformément à un aspect particulièrement remarquable du procédé, objet de la présente invention, l'interpolation effectuée permet d'obtenir une approximation de la valeur de l'échantillon d'onde acoustique en sortie du résonateur ou de la section $S_1$, à l'instant d'échantillonnage suivant $t_n$ et à tout instant successif $t_{n+l}$. Sur la figure 4a, le module Traitement itératif désigne le traitement réalisé sur les échantillons lus en mémoire $p_0(0, t_{l-1})$, $p_0(0, t_l)$ pour obtenir les échantillons en sortie $p_0(0, t_{l+\varepsilon l})$ à $t_{n-1}$ et $p_0(0, t_{k+\varepsilon k})$ à $t_n$ et ainsi de suite, conformément au mode opératoire de la figure 4b.

D'une manière générale, on indique que l'opération d'interpolation peut être effectuée selon une interpolation linéaire des valeurs d'échantillons $p_0(0, t_{l+m-1})$ et $p_0(0, t_{l+m})$. Si nécessaire, une interpolation d'ordre supérieur peut être utilisée pour obtenir une meilleure approximation.

La procédure de recherche précitée prend automatiquement en compte la contrainte temporelle CO.

Bien entendu, pour la mise en oeuvre de recherche de la valeur d'échantillon atteignant l'extrémité du résonateur ou de la section $S_1$ à un instant d'échantillonnage donné $t_n$, on a supposé que la valeur de cet échantillon à l'instant d'échantillonnage précédent $t_{n-1}$ était connue.

En conséquence, et conformément à un aspect du procédé, objet de la présente invention, on indique que la première valeur antérieure $p_0(0, t_{l+\varepsilon l})$ atteignant l'extrémité du résonateur à l'instant d'échantillonnage $t_0$ est initialisée par les conditions initiales du résonateur ou de la section au repos, soit pour un résonateur comportant une section $S_1$ de longueur $L_0$ ainsi que représenté en figure 4a, $p_0(0, t_0) = p_0(z, t_0) = p_0(L_0, t_0) = 0$, $z \in [0, L_0]$ et, en ce qui concerne le temps de propagation $\Delta p_0(0, t_0) = L_0/c_0$. Ces conditions indiquent que le système est au repos avant initialisation et donc la vitesse de propagation est $c_0$.

Enfin, on indique que, en raison de la mise en oeuvre d'une interpolation pour calculer la valeur de chaque échantillon de sortie en extrémité de tubes ou de sections Si, la prise en compte d'un tube ou d'un résonateur ou d'une section de longueur fractionnaire par rapport à la discrétisation spatiale n'introduit aucune contrainte de coût de calcul supplémentaire.

On a ainsi décrit un procédé de simulation de la propagation non linéaire d'une onde acoustique, lequel, grâce à la modélisation de la propagation d'une telle onde dans un tube droit sans pertes, permet la modélisation de cette propagation dans un résonateur de forme quelconque représenté par une succession de sections de forme sensiblement quelconque.

Des simulations effectuées à partir d'une onde acoustique sinusoïdale dans un tube droit ont permis de montrer la conformité des ondes acoustiques effectivement obtenues avec les prédictions théoriques. En particulier, la distorsion de l'onde augmente avec la distance de propagation et avec l'amplitude du signal entrant dans le résonateur ou dans la section considérée, ainsi que représenté en figures 2a et 2b. La formation d'ondes de choc a été observée et la propagation de ce type d'ondes conduit à la formation progressive d'une onde triangulaire dont l'amplitude décroît progressivement.

**Revendications**

**1.** Procédé de simulation de la propagation non linéaire d'une onde acoustique dans un guide d'ondes ou un résonateur, cette propagation non linéaire correspondant à une loi de vitesse de propagation non linéaire en fonction de l'amplitude de cette onde acoustique dans une direction de propagation, ce procédé consistant à décomposer ce guide d'ondes ou ce résonateur, dans la direction de propagation, en une succession de sections de différentes longueurs, à appliquer au voisinage de la jonction de deux sections successives une loi de propagation linéaire, et, pour chaque section successive, à décomposer le champ de l'onde acoustique en la somme d'une première et d'une deuxième onde progressive se propageant indépendamment non linéairement en sens inverse le long de ladite direction de propagation vers chaque extrémité de ladite section, **caractérisé en ce qu'**il consiste en outre :

■ à associer à chaque échantillon de l'onde acoustique successif entrant dans chaque section une vitesse de propagation non linéaire fonction du milieu de propagation dans ladite section ;
■ à imposer à chaque échantillon successif à l'entrée de chaque section une relation d'ordre temporel sur tout le trajet de propagation, ce qui permet de calculer en extrémité de chaque section du guide d'ondes ou du résonateur une séquence d'échantillons arrivant en extrémité du guide d'ondes ou du résonateur pour des instants différents compte tenu de la période d'échantillonnage en entrée de ces derniers.

2. Procédé selon la revendication 1, **caractérisé en ce que**, lorsque le milieu de propagation dans chacune des sections successives est constitué par un gaz, ladite vitesse de propagation non linéaire vérifie la relation :

$$c(i) = c_0 + \alpha p(i)$$

relation dans laquelle

$$\alpha = \frac{\gamma + 1}{2\rho_0 c_0}$$

où :

$\gamma$     représente le rapport de la chaleur spécifique du gaz à pression constante à la chaleur spécifique du gaz à volume constant, $\gamma = Cp/Cv$ ;

$\rho_0$     représente la masse volumique du gaz au repos ;

$c_0$     représente la célérité de l'onde acoustique dans le gaz.

3. Procédé selon l'une des revendications 1 ou 2, **caractérisé en ce que** lesdites sections sont de forme cylindrique de révolution, parallélépipédique, quelconque.

4. Procédé selon l'une des revendications 1 à 3, **caractérisé en ce que**, dans le but de simuler la propagation d'échantillons d'onde acoustique $p_0(0, t_l)$ introduits à l'entrée d'abscisse z=0 du guide d'ondes ou du résonateur, ces échantillons étant mémorisés dans une mémoire, le pas d'échantillonnage définissant le retard entre échantillons successifs, et dans le but d'obtenir en sortie du guide d'ondes ou du résonateur une valeur d'échantillon coïncidant en un instant $t_n$ à une valeur interpolée $p_0(0, t_{k+\varepsilon k})$ entre deux valeurs échantillonnées d'entrée, étant supposé que la valeur interpolée antérieure $p_0(0, t_{l+\varepsilon l})$ a effectivement atteint l'extrémité du résonateur à un instant $t_{n-1}$, ladite contrainte temporelle pour ces échantillons vérifiant la relation :

$$t_{k+\varepsilon k} > t_{l+\varepsilon l} > t_l$$

l'échantillon d'entrée $p_0(0, t_l)$ ayant dépassé l'extrémité du résonateur à l'instant $t_n$ et le temps de propagation $\Delta p_0(0, t_l)$ de l'échantillon introduit à l'instant $t_l$ à l'entrée du résonateur étant inférieur au temps $\theta = t_n - t_l$ écoulé depuis l'introduction de cet échantillon à l'entrée du guide d'ondes ou du résonateur $\Delta p_0(0, t_l) < t_n - t_l$,

- ■   on lit dans la mémoire les échantillons $p_0(0, t_{l+m})$ mémorisés aux instants d'échantillonnage successifs $t_{l+m}$ avec m=1 à la première passe ;
- ■   on compare par critère de comparaison d'infériorité la valeur de l'instant d'échantillonnage $t_{l+m}$ augmenté de la durée de propagation $\Delta p_0(0, t_{l+m})$ de l'échantillon de valeur $p_0(0, t_{l+m})$ et l'instant $t_n$ ;
- ■   tant que le critère de comparaison d'infériorité est satisfait, on incrémente la valeur de m d'une unité, m = m+1, on calcule le temps de propagation $\Delta p_0(0, t_{l+m+1})$ de l'échantillon mémorisé de rang $t_{l+m+1}$ et l'on réitère ledit critère de comparaison d'infériorité ;
- ■   sinon, on attribue à l'échantillon recherché $p_0(t_{k+\varepsilon k})$ un instant de coïncidence en sortie du guide d'ondes ou du résonateur $t_{k+\varepsilon k}$ compris entre les instants $t_{l+m-1}$ et $t_{1+m}$ ;
- ■   on lit dans la mémoire les échantillons de rang k = l+m-1 et k+1 = l+m et la valeur de ces échantillons $p_0(t_{l+m-1})$ et $p_0(t_{l+m})$ ;
- ■   on effectue une interpolation des valeurs d'échantillons lues $p_0(0, t_{l+m-1})$ et $p_0(0, t_{l+m})$ selon une valeur interpolée $p_0(0, t_{k+\varepsilon k})$ ;
- ■   on affecte à la valeur d'échantillon coïncidant avec l'instant $t_n$ en sortie du guide d'ondes ou du résonateur ladite valeur interpolée $p_0(0, t_{k+\varepsilon k})$.

5. Procédé selon la revendication 4, **caractérisé en ce que** ladite interpolation est une interpolation linéaire des valeurs d'échantillons $p_0(0, t_{l+m-1})$ et $p_0(0, t_{l+m})$.

**6.** Procédé selon l'une des revendications 4 ou 5, **caractérisé en ce que** ladite première valeur antérieure $p_0(0, t_{l+\varepsilon l})$ atteignant l'extrémité du guide d'ondes ou du résonateur à l'instant d'échantillonnage antérieur $t_0$ est initialisée par les conditions initiales du résonateur au repos, soit $p_0(0, t_0) = p_0(z, t_0) = p_0(L_0, t_0) = 0$ et $\Delta p_0(0,t_0) = \dfrac{L_0}{c_0}$.

**Patentansprüche**

**1.** Verfahren zur Simulation der nichtlinearen Ausbreitung einer akustischen Welle in einem Wellenleiter oder einem Resonator, wobei diese nichtlineare Ausbreitung einer nichtlinearen Abhängigkeit der Ausbreitungsgeschwindigkeit von der Amplitude dieser akustischen Welle in einer Ausbreitungsrichtung entspricht, wobei das Verfahren darin beruht, diesen Wellenleiter oder diesen Resonator in der Ausbreitungsrichtung in eine Folge von Abschnitten unterschiedlicher Länge zu zerlegen, in der Nähe des Übergangs zwischen zwei aufeinanderfolgenden Abschnitten eine lineare Abhängigkeit der Ausbreitung anzuwenden und für jeden aufeinanderfolgenden Abschnitt das Feld der akustischen Welle in die Summe einer ersten und einer zweiten progressiven Welle zu zerlegen, die sich unabhängig nichtlinear gegenläufig in der Ausbreitungsrichtung zu jedem Ende des Abschnitts hin ausbreiten, **dadurch gekennzeichnet, dass** es ferner darin beruht

- jedem aufeinanderfolgenden Abtastwert der akustischen Welle, der in jeden Abschnitt eintritt, eine nichtlineare Ausbreitungsgeschwindigkeit in Abhängigkeit vom Ausbreitungsmedium in diesem Abschnitt zuzuordnen;
- jedem aufeinanderfolgenden Abtastwert am Eingang jedes Abschnitts eine zeitliche Reihenfolgebeziehung auf dem gesamten Ausbreitungsweg zuzuordnen, was es erlaubt, am Ende jedes Abschnitts des Wellenleiters oder des Resonators eine Folge von am Ende des Wellenleiters oder des Resonators eintreffenden Abtastwerten für verschiedene Zeitpunkte unter Berücksichtigung von deren Abtastperiode am Eingang zu berechnen.

**2.** Verfahren nach Anspruch 1, **dadurch gekennzeichnet, dass**, wenn das Ausbreitungsmedium in jedem der aufeinanderfolgenden Abschnitte durch ein Gas gebildet ist, die nichtlineare Ausbreitungsgeschwindigkeit folgende Beziehung erfüllt:

$$c\,(i) = c_0 + \alpha p(i)$$

wobei

$$\alpha = \gamma + 1/2\,\rho_0 c_0$$

gilt und

$\gamma$      das Verhältnis zwischen der spezifischen Wärme des Gases bei konstantem Druck und der spezifischen Wärme des Gases bei konstantem Volumen, $\gamma = Cp/Cv$ angibt;
$\rho_0$     die Dichte des Gases in Ruhe darstellt;
$c_0$     die Schnelle des akustischen Welle in dem Gas darstellt.

**3.** Verfahren nach einem der Ansprüche 1 oder 2, **dadurch gekennzeichnet, dass** die besagten Abschnitte rotationszylindrisch, quaderförmig, beliebig geformt sind.

**4.** Verfahren nach einem der Ansprüche 1 bis 3, **dadurch gekennzeichnet, dass** mit dem Ziel der Simulation der Ausbreitung von Abtastwerten einer akustischen Welle $p_0(0, t_l)$, die am Eingang mit Abszisse $z = 0$ des Wellenleiters oder des Resonators eingespeist werden, diese Abtastwerte in einem Speicher gespeichert werden, wobei die Abtastschrittweite die Verzögerung zwischen aufeinanderfolgenden Abtastwerten definiert, und mit dem Ziel, am Ausgang des Wellenleiters oder des Resonators einen Abtastwert zu erhalten, der zu einem Zeitpunkt $t_n$ mit einem interpolierten Wert $p_0(0, t_{k+\varepsilon k})$ zwischen zwei Eingangsabtastwerten übereinstimmt, wobei angenommen wird, dass der vorherige interpolierte Wert $p_0(0, t_l+\varepsilon_l)$ tatsächlich das Ende des Resonators zu einem Zeitpunkt $t_{n-1}$ erreicht hat, wobei die zeitliche Randbedingung für diese Abtastwerte die Beziehung:

$$t_{k+\varepsilon k} > t_{l+\varepsilon l} > t_l$$

erfüllt, der Eingangsabtastwert $p_0(0, t_l)$ das Ende des Resonators zum Zeitpunkt $t_n$ passiert hat und die Ausbreitungszeit $\Delta p_0(0, t_l)$ des zum Zeitpunkt $t_1$ am Eingang des Resonators eingegebenen Abtastwertes kleiner als die seit der Eingabe dieses Abtastwertes am Eingangswellenleiter oder des Resonators verstrichene Zeit $\theta = t_n t_l$ ist: $\Delta p_0(0, t_l) < t_n - t_l$,

- in dem Speicher die zu den aufeinanderfolgenden Abtastzeitpunkten $t_{l+m}$ gespeicherten Abtastwerte $p_0(0, t_{l+m})$ gelesen werden, wobei im ersten Durchgang m = 1 ist;

- mit einem Kleiner-Vergleichskriterium der Wert des Abtastzeitpunktes $t_{l+m}$ zuzüglich der Ausbreitungszeit $\Delta p_0(0, t_{l+m})$ des Abtastwertes mit Wert $p_0(0, t_{l+m})$ und der Zeitpunkt $t_n$ verglichen werden;

- so lange das Kleiner-Vergleichskriterium erfüllt ist, der Wert von m um eine Einheit vermehrt wird, m = m+1, die Ausbreitungszeit $\Delta p_0(0, t_{l+m+1})$ des gespeicherten Abtastwertes mit Rang $t_{l+m+1}$ berechnet wird und das Kleiner-Vergleichskriterium wiederholt wird;

- anderenfalls dem gesuchten Abtastwert $p_0(t_{k+\varepsilon k})$ ein Koinzidenzzeitpunkt am Ausgang des Wellenleiters oder des Resonators $t_{k+\varepsilon k}$ zugeordnet wird, der zwischen den Zeitpunkten $t_{l+m-1}$ und $t_{l+m}$ liegt;

- in dem Speicher die Abtastwerte mit Rang k = l+m-1 und k+1 = l+m und der Wert dieser Abtastwerte $p_0(t_{l+m+1})$ und $p_0(t_{l+m})$ gelesen werden;

- eine Interpolation der gelesenen Abtastwerte $p_0(0, t_{l+m-1})$ und $p_0(0, t_{l+m})$ gemäß einem interpolierten Wert $p_0(0, t_{k+\varepsilon k})$ durchgeführt wird;

- dem mit dem Zeitpunkt $t_n$ am Ausgang des Wellenleiters oder des Resonators zusammentreffenden Abtastwert der interpolierte Wert $p_0(0, t_{k+\varepsilon k})$ zugewiesen wird.

5. Verfahren nach Anspruch 4, **dadurch gekennzeichnet, dass** die Interpolation eine lineare Interpolation zwischen den Abtastwerten $p_0(0, t_{l+m-1})$ und $p_0(0, t_{l+m})$ ist.

6. Verfahren nach einem der Ansprüche 4 oder 5, **dadurch gekennzeichnet, dass** besagter erster früherer Wert $p_0(0, t_{l+\varepsilon l})$, der das Ende des Wellenleiters oder des Resonators zum vorhergehenden Abtastzeitpunkt $t_0$ erreicht, mit den Anfangsbedingungen des Resonators in Ruhe, also $p_0(0, t_0) = p_0(z, t_0) = p_0(L_0, t_0) = 0$ und $\Delta p_0(0, t_0) = L_0/C_0$, initialisiert wird.

## Claims

1. A method of simulating the non-linear propagation of an acoustic wave in a waveguide or resonator, this non-linear propagation corresponding to a law of non-linear propagation velocity as a function of the amplitude of this acoustic wave in a direction of propagation, this method consisting in breaking this waveguide or resonator down into a succession of sections of different lengths in the direction of propagation, applying a linear propagation law in the vicinity of the boundary between two successive sections and, for each successive section, in breaking down the field of the acoustic wave into the sum of a first and a second progressive wave propagated independently and non-linearly in the inverse direction along said direction of propagation towards each end of said section, **characterised in that** it also consists in:

■ associating a non-linear propagation velocity with each successive sample of the acoustic wave entering each section as a function of the propagation medium in said section;
■ imposing on each successive sample as it enters each section a time order equation across the entire propagation path, which enables, at the end of each section of the waveguide or resonator, a sequence of samples arriving at the end of the waveguide or resonator to be computed for the different instants taking account of the sampling rate at the input thereof.

2. A method as claimed in claim 1, **characterised in that** if the propagation medium in each of the successive sections is a gas, said non-linear propagation velocity verifies the equation:

$$c\,(i) = c_0 + \alpha p(i)$$

in which equation

$$\alpha = \frac{\gamma + 1}{2\rho_0 c_0}$$

where:

$\gamma$      represents the ratio of the specific heat of the gas at constant pressure to the specific heat of the gas at constant volume, $\gamma = Cp/Cv$ ;

$\rho_0$      represents the mass of the gas by volume at rest;

$c_0$      represents the speed of the acoustic wave in the gas.

**3.** A method as claimed in one of claims 1 or 2, **characterised in that** said sections describe a cylindrical shape in space, a parallelepipedic or any other shape.

**4.** A method as claimed in one of claims 1 to 3, **characterised in that** in order to simulate the propagation of acoustic wave samples $p_0(0, t_l)$ introduced at the abscissa input at z=0 of the waveguide or resonator, the samples being stored in a memory, the sampling rate defining the delay between successive samples, and with a view to obtaining at the output of the waveguide or resonator a sample value coinciding with an instant $t_n$ at a value $p_0(0, t_{k+\varepsilon k})$ interpolated between two input sample values, assuming that the previous interpolated value $p_0(0, t_l+\varepsilon_l)$ in effect reached the end of the resonator at an instant $t_{n-1}$, said time constraint for these samples verifying the equation:

$$t_{k+\varepsilon k} > t_{l+\varepsilon l} > t_l$$

the input sample $p_0\,(0, t_l)$ having passed beyond the end of the resonator at the instant $t_n$ and the propagation time $\Delta p_0(0, t_l)$ of the sample introduced at the input of the resonator at the instant $t_1$ being less than the time $\theta = t_n - t_l$ elapsed since this sample was introduced to the input of the waveguide or resonator $\Delta p_0(0, t_l) < t_n - t_l$,

- the samples $p_0(0, t_{l+m})$ stored in memory are read from the memory at the successive sampling instants $t_{l+m}$, where m=1, at the first pass;
- an inferiority comparison criterion is used to compare the value of the sampling instant $t_{l+m}$ plus the propagation time $\Delta p_0(0, t_{l+m})$ of the sample having value $p_0(0, t_{l+m})$ and instant $t_n$;
- if the inferiority comparison criterion is satisfied, the value of m is increased by one unit to give m = m+1, the propagation time $\Delta p_0(0, t_{l+m+1})$ of the stored sample of rank $t_{l+m+1}$ is computed and the inferiority comparison criterion is reiterated;
- if not, the sought sample $p_0(t_{k+\varepsilon k})$ is assigned an instant of coincidence at the output of the waveguide or resonator $t_{k+\varepsilon k}$ in the range between the instants $t_{l+m-1}$ and $t_{l+m}$;
- the samples of rank k = l+m-1 and k+1 = l+m and the value of these samples $p_0(t_{l+m-1})$ and $p_0(t_{l+m})$ are read from the memory;
- an interpolation of the sample values read $p_0(0, t_{1+m-1})$ and $p_0(0, t_{l+m})$ is applied in accordance with an interpolated value $p_0(0, t_{k+\varepsilon k})$ ;
- said interpolated value $p_0(0, t_{k+\varepsilon k})$ is assigned to the sample value coinciding with the instant $t_n$ at the output of the waveguide or resonator.

**5.** A method as claimed in claim 4, **characterised in that** said interpolation is a linear interpolation of the sample values $p_0(0, t_{l+m-1})$ and $p_0(0, t_{l+m})$.

**6.** A method as claimed in one of claims 4 or 5, **characterised in that** said first earlier value $p_0(0, t_{l+\varepsilon l})$ reaching the end of the waveguide or resonator at the earlier sampling instant to is initialised by the initial conditions of the idle resonator, i.e. $p_0(0, t_0) = p_0(z, t_0) = p_0(L_0, t_0) = 0$ and $\Delta p_0(0, t_0) = \dfrac{L_0}{c_0}$.

# FIG.1a

```
┌─────────────────────────────┐
│ DÉCOMPOSITION  DU RÉSONATEUR │
│ EN SECTIONS Sj  DANS         │───A
│ DIRECTION  DE  PROPAGATION   │
└─────────────────────────────┘
              │
              ▼
┌─────────────────────────────┐
│ PROPAGATION  LINÉAIRE        │
│ ENTRE SECTIONS SUCCESSIVES   │───B
│    Sj , Sj+1     μj,j+1       │
└─────────────────────────────┘
              │
              ▼
┌─────────────────────────────┐
│ DÉCOMPOSITION CHAMP          │
│ PRESSION EN ONDE DIRECTE     │───C
│ ET ONDE INVERSE              │
└─────────────────────────────┘
              │
              ▼
┌─────────────────────────────┐
│ ASSOCIATION À CHAQUE         │
│ ÉCHANTILLON ENTRANT DANS     │
│ UNE SECTION Sj D'UNE VITESSE │───D
│ DE PROPAGATION NON LINÉAIRE  │
└─────────────────────────────┘
              │
              ▼
┌─────────────────────────────┐
│ RELATION D'ORDRE TEMPOREL    │
│ SUR CHAQUE ÉCHANTILLON       │
│ SUR TRAJET DE PROPAGATION    │───E
│ DE CHAQUE SECTION Sj         │
└─────────────────────────────┘
              │
              ▼
┌─────────────────────────────┐
│ CALCUL EN EXTRÉMITÉ DE       │
│ CHAQUE SECTION Sj ET DU      │
│ RÉSONATEUR D'UNE SÉQUENCE    │───F
│ D'ÉCHANTILLONS RAPPORTÉS À   │
│ PÉRIODE D'ÉCHANTILLONNAGE EN │
│ ENTRÉE DU RÉSONATEUR         │
└─────────────────────────────┘
```

## FIG.1b.

## FIG.3a.

## FIG.3b.

FIG.2a.

FIG.2b.

ENTRÉE DU TUBE

x SIGNAL D'ENTRÉE
   DISCRET

↓↑ MARQUE DES TEMPS
   DISCRETS

FIG. 2c.

SORTIE DU TUBE

x SORTIE DANS LE CAS
   LINÉAIRE
o POSITION DES ÉCHANTILLONS
   DU SIGNAL D'ENTRÉE APRÈS
   LA PROPAGATION NONLINÉAIRE

↓↑ MARQUE DES TEMPS
   DISCRETS

FIG. 2d.

FIG.3c.

$S_1$

S2

po(o, tl)

po(o, tl+1)

po(o, tl-1)

tl

tl-1

tl+1

po(o, tk+εk) à tn

po(o, tl+εl) à tn-1

S1

tn, tn-1

Lo

0

z

µ01

µ10

CLK

po(o, tl-1)
po(o, tl)

MEM

po(o, tl-1)
po(o, tl)

TRAITEMENT
ITÉRATIF

po(o, tl+εl) à tn-1
po(o, tk+εk) à tn

FIG.4a.

$po(o, tl+\epsilon l)$ EN SORTIE
à $tn-1$ ————1000

$tk + \epsilon k > tl + \epsilon l > tl$ ————1001

$m = 1$ ————1002

1004
$m = m+1$

1003

oui ⟨ $tl + m + \Delta po(o, tl+m) < tn$ ⟩ NON

$k = l+m-1 < k + \epsilon k < l+m = k+1$ ————1005

LECTURE MEM DE
$po(o,k) \; po(o,k+1)$ ————1006

INTERPOLATION
$po(o, tk+\epsilon k) = I[po(o,k), po(o,k+1)]$ ————1007

FIG.4b.

1008

20